# EUROPÄISCHE PATENTSCHRIFT

(11) **EP 0 693 414 B1**
(45) Veröffentlichungstag und Bekanntmachung des Hinweises auf die Patenterteilung: **27.08.1997**
(21) Anmeldenummer: 95107286.7
(22) Anmeldetag: 13.05.1995
(51) Int. Cl.: B62D 25/08

(54) **Aufbaustruktur eines Personenkraftwagens**
Passenger car body structure
Structure de carrosserie de véhicule automobile

(30) Priorität: 28.06.1994 DE 4422498
(43) Veröffentlichungstag der Anmeldung: 24.01.1996
(73) Patentinhaber: Dr.Ing.h.c. F. Porsche Aktiengesellschaft, 70435 Stuttgart (DE)
(72) Erfinder: Sturm, Hermann, D-71287 Weissach (DE)

(56) Entgegenhaltungen:
- AU-B- 440 852
- DE-A- 1 430 845
- GB-A- 2 087 319
- GB-A- 2 206 085
- US-A- 3 321 235

## Beschreibung

Die Erfindung bezieht sich auf eine Aufbaustruktur eines Personenkraftwagens mit einer zwischen dem Vorderwagen und dem Fahrgastraum angeordneten Stirnwand gemäß dem Oberbegriff des Patentanspruchs 1.

Aus der EP 0 226 012 B1 geht eine Aufbaustruktur eines Personenkraftwagens mit einer zwischen dem Vorderwagen und dem Fahrgastraum angeordneten Stirnwand und zwei voneinander beabstandeten Längsträgern hervor, die an dahinterliegende, in Verlängerung der vorderen Längsträger verlaufende Bodenträger angeschlossen sind. Ferner umfaßt diese Aufbaustruktur seitlich außenliegende Schweller, einen Boden und aufrechte Scharniersäulen. Ein hinterer Endabschnitt des vorderen Längsträgers ist über ein Trägerelement mit dem seitlich außenliegenden Schweller verbunden.

Aufgabe der Erfindung ist es, die Aufbaustruktur im Bereich einer den Fahrgastraum begrenzenden Stirnwand so weiterzubilden, daß zum einen eine steife Fahrgastzelle geschaffen ist und zum andern die bei einem Frontalaufprall auftretenden Kräfte gut aufgenommen und großflächig von den vorderen Längsträgern in die angrenzende Aufbaustruktur eingeleitet werden.

Diese Aufgabe wird durch die kennzeichnenden Merkmale des Patentanspruchs 1 gelöst. Weitere, die Erfindung weiterbildende Merkmale sind in den Unteransprüchen enthalten.

Die mit der Erfindung hauptsächlich erzielten Vorteile sind darin zu sehen, daß durch die Anbindung der unteren, vorderen Längsträger an erste und zweite stirnwandseitige Querträger ein günstiger Kraftfluß von aus einem Frontalaufprall herrührenden Kräften erfolgt, da die Kräfte von der Höhe der Querträger in eine untere Trägerstruktur (Stirnwand, Boden, Schweller, Scharniersäule) bzw. in einen Verstärkungsträger des Mitteltunnels eingeleitet werden.

Die Kraftaufnahme wird dadurch positiv beeinflußt, daß Endbereiche des dem Vorderwagen zugekehrten ersten Querträgers in den Hohlraum der angrenzenden vorderen Längsträger hineinragen und an die Stirnwand und ein innerhalb des Längsträgers angeordnetes versteifendes Stegblech angeschlossen sind.

Das nach unten in Richtung Bodenträger gezogene Stegblech ist mit seinem hinteren Rand an die Stirnwand herangeführt und bewirkt, daß die vorderen Längsträger bei einem Aufprallstoß nicht nach oben hin wegkippen. Die vorderen Längsträger erstrecken sich durchgehend bis zu dem ersten, auf die Stirnwand aufgesetzten Querträger und sind kraftübertragend mit diesen verbunden. Ein etwa in der gleichen Höhe, auf der dem Fahrgastraum zugekehrten Seite der Stirnwand angeordneter zweiter Querträger verteilt die Kräfte in die Stirnwand, die Radhauswandungen, in die seitlichen Schweller, die aufrechten Scharniersäulen und in eine auf den Mitteltunnel aufgesetzte Tunnelverstärkung, wodurch eine stabile Fahrgastzelle geschaffen wird. Der zweite Querträger teilt sich in seitlichen außenliegenden Bereichen in zwei übereinanderliegende Hohlträgerabschnitte, die durch einen stegartigen Verbindungsbereich aneinander angeschlossen sind.

In der Zeichnung wird ein Ausführungsbeispiel der Erfindung näher erläutert.

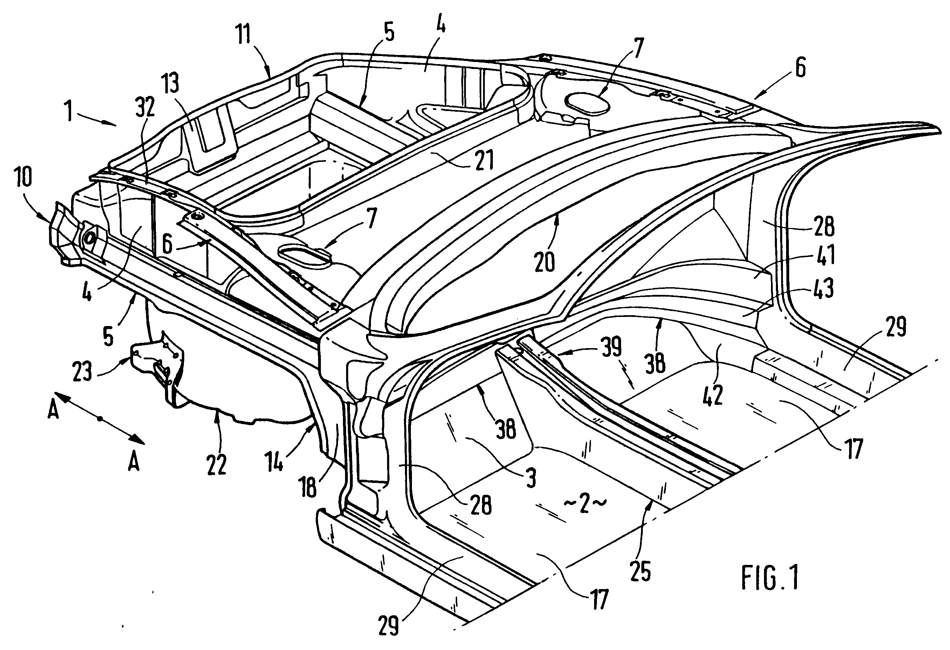

Es zeigt
- Fig. 1: eine perspektivische Ansicht von schräg hinten auf eine vordere Aufbaustruktur eines Personenkraftwagens,

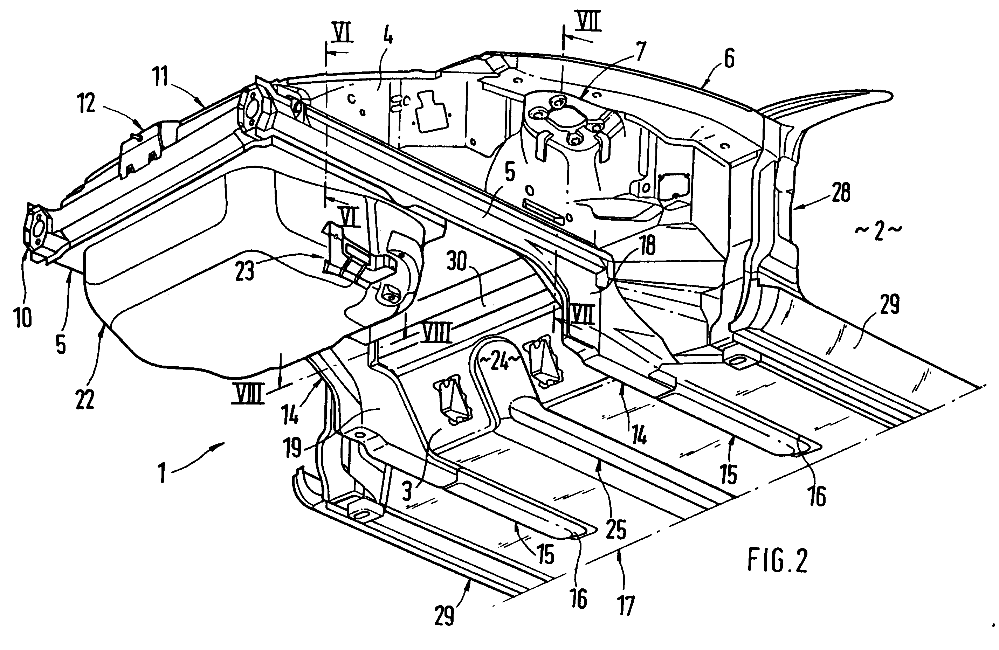

- Fig. 2: eine perspektivische Ansicht von schräg vorne und unten auf die vordere Aufbaustruktur des Personenkraftwagens,

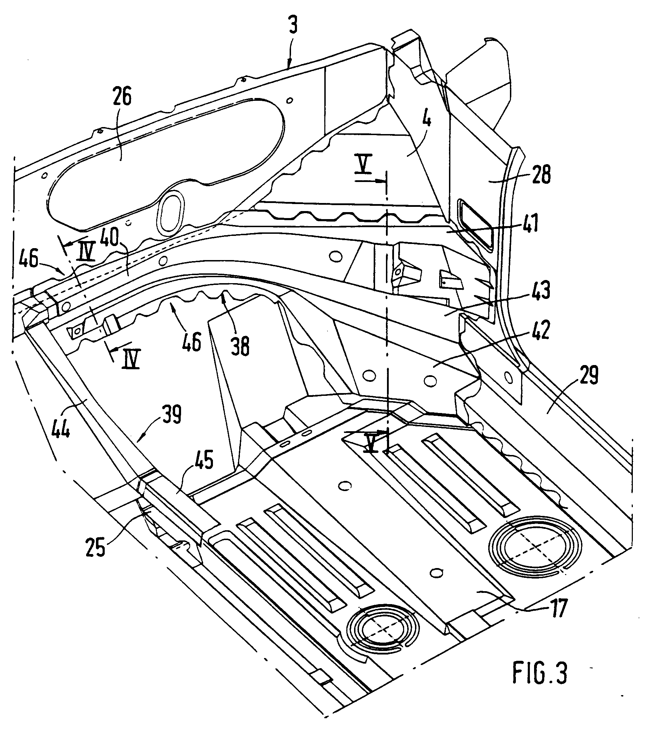

- Fig. 3: eine perspektivische Teilansicht vom Fahrgastraum aus auf eine Stirnwand und angrenzende Bauteile des Aufbaustruktur,

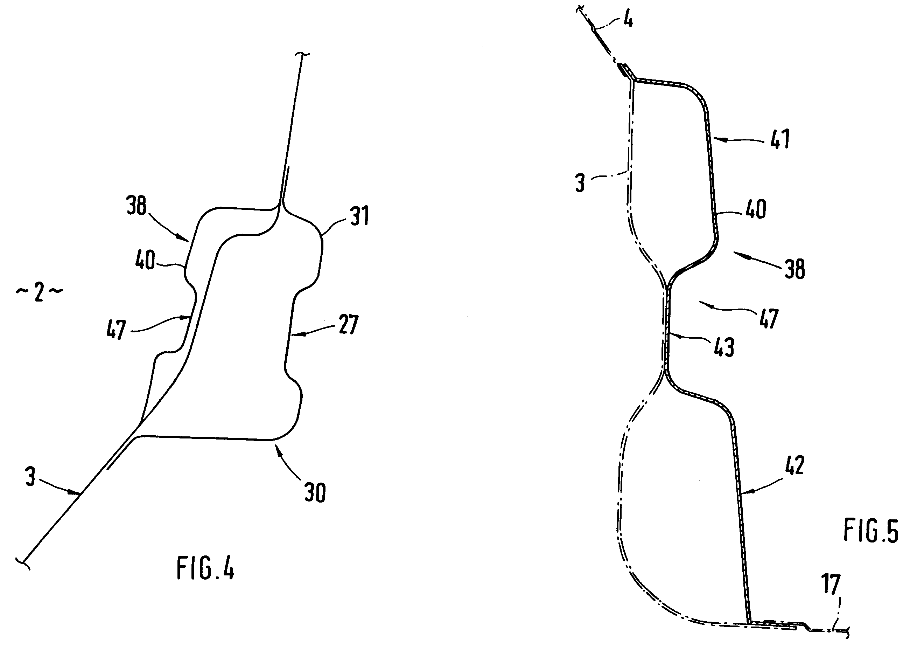

- Fig. 4: einen Schnitt nach der Linie IV-IV der Fig. 3 in größerem Maßstab,
- Fig. 5: einen Schnitt nach der Linie V-V der Fig. 3 in größerem Maßstab,
- Fig. 6: einen Schnitt nach der Linie VI-VI der Fig. 2 in größerem Maßstab,
- Fig. 7: einen Schnitt nach der Linie VII-VII der Fig. 2 in größerem Maßstab,
- Fig. 8: einen Schnitt nach der Linie VIII-VIII der Fig. 2 in größerem Maßstab.

Eine vordere Aufbaustruktur 1 eines Personenwagens wird im wesentlichen gebildet durch eine einen Fahrgastraum 2 begrenzende Stirnwand 3 und Radhauswandungen 4, die in Fahrzeuglängsrichtung A-A verlaufen. An jede Radhauswandung 4 ist ein unterer, vorderer Längsträger 5 und ein oberer, vorderer Längsträger 6 angeschlossen. Ferner ist im Bereich jeder Radhauswandung 4 eine Federbeinaufnahme 7 vorgesehen.

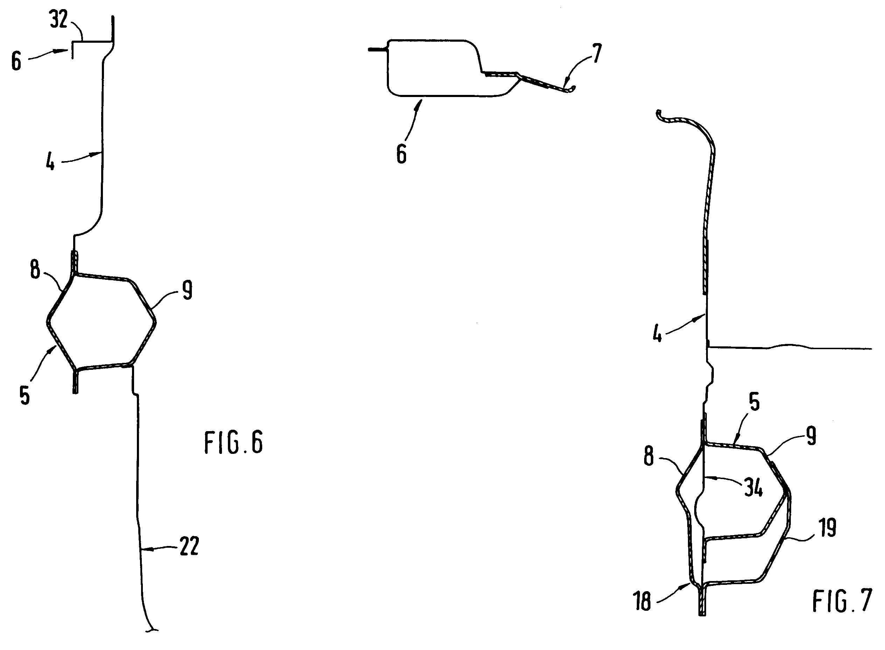

Der - im Querschnitt gesehen - etwa 6- oder 8-eckig ausgebildete untere vordere Längsträger 5 setzt sich gemäß Fig. 6 aus einem äußeren Trägerabschnitt 8 und einem inneren Trägerabschnitt 9 zusammen, die einen geschlossenen Hohlkörper bilden. An seinem vorderen Ende weist der Längsträger 5 eine Querschnittserweiterung 10 auf, in die eine nicht näher dargestellte Pralldämpferaufnahme eines Stoßfängersystems eingesetzt ist. Die beiden Längsträger 5 sind durch einen vorderen profilierten Querträger 11 miteinander verbunden. In einem mittleren Bereich der Quererstreckung des Querträgers 11 sind eine Schloßaufnahme 12 und ein Schließblech 13 auf den Querträger 11 aufgesetzt.

Der Querträger 11 umgreift in einem seitlich außenliegenden Bereich den inneren Trägerabschnitt 9 des Längsträgers 5 und ist mit diesem dicht verbunden.

In der Seitenansicht gesehen erstrecken sich die Längsträger 5 etwa horizontal ausgerichtet vom vorderen Querträger 11 durchgehend bis zur Stirnwand 3.

Vor der Stirnwand 3 erweitert sich der Längsträger 5 nach unten hin und ist über einen Anschlußträger 14 an einen tieferliegenden Bodenträger 15 angeschlossen. Der Bodenträger 15 wird durch ein hutförmig profiliertes Blech 16 gebildet, das auf die Unterseite des Bodens 17 aufgesetzt ist. Der Anschlußträger 14 ist mit seinem hinteren Ende an die Stirnwand 3 angeschlossen und setzt sich aus einer einstückigen Anformung 18 des äußeren Trägerabschnitts 8 des Längsträger 5 und einem separaten profilierten Trägerblech 19 zusammen (Fig. 7). Der Anschlußträger 14 könnte jedoch auch einstückig mit dem Längsträger 5 oder dem Bodenträger 15 ausgebildet sein. In der Draufsicht gesehen verlaufen der Anschlußträger 14 und der nachfolgende Bodenträger 15 in geradliniger Verlängerung des vorderen Längsträgers 5.

Ein hinteres Ende des Bodenträgers 15 ist etwa bis zu einem auf die Oberseite des Bodens 17 aufgesetzten, nicht näher dargestellten Sitzquerträger geführt oder überragt diesen nach hinten hin. An die beiden vorderen Längsträger 5, den vorderen Querträger 11 und eine querverlaufende Schottwand 21 ist eine nach unten ragende wannenförmige Reserveradmulde 22 angeschlossen. An der Außenseite der Reserveradmulde 22 sind örtlich Halter 23 oder ein nicht näher dargestellter Versteifungsrahmen zur Befestigung einer Vorderachse oder dgl. angeordnet.

Die querverlaufende Stirnwand 3 weist in einem mittleren Bereich ihrer Quererstreckung eine Aussparung 24 auf, an die ein längsverlaufender Mitteltunnel 25 angeschlossen ist.

Oberhalb des Mitteltunnels 25 sind an der Stirnwand 3 Öffnungen 26, ausgebildet, die durch nicht näher dargestellte Deckel verschließbar sind. An ihrem seitlich außenliegenden Ende ist die Stirnwand 3 an die jeweils angrenzende, aufrechte Scharniersäule 28 angebunden, und zwar an deren Innenseite.

Die aufrechten Scharniersäulen 28 sind mit ihren unteren Enden auf seitlich außenliegende, horizontale Schweller 29 aufgesetzt.

Jeder obere Längsträger 6 ist an die korrespondierende Scharniersäule 28 angeschlossen und weist von der Scharniersäule 28 bis kurz nach der Federbeinaufnahme 7 eine hohlträgerartige Struktur auf. Weiter vorne ist lediglich ein abgewinkelter Flansch 32 weitergeführt, an dem angrenzende, nicht näher dargestellte Kotflügel lösbar befestigt sind (Fig. 6). In Höhe der oberen Längsträger 6 sind die beiden Scharniersäulen 28 durch einen Windlaufquerträger 20 miteinander verbunden.

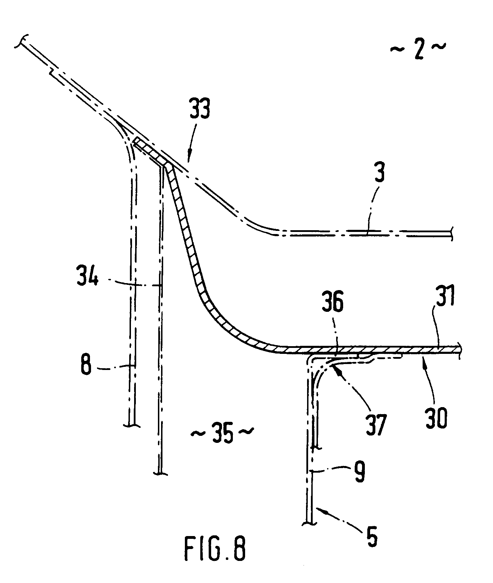

Eine gute Krafteinleitung von den unteren, vorderen Längsträgern 5 in die angrenzende Aufbaustruktur 1 wird dadurch erreicht, daß die beiden vorderen, geradlinigen Längsträger 5 durchgehend bis zur Stirnwand 3 herangeführt sind und mit dieser und einem ersten, außenseitig auf die Stirnwand 3 aufgesetzten Querträger 30 kraftübertragend verbunden sind. Der erste Querträger 30 wird durch ein auf die Stirnwand 3 aufgesetztes, etwa hutförmig profiliertes Tragelement 31 gebildet, das an seinen seitlich außenliegenden Enden 33 an die Stirnwand 3 und ein innerhalb der vorderen Längsträger 5 angeordnetes, versteifendes Stegblech 34 angeschlossen ist (Fig. 8). Das Ende 33 des ersten Querträgers 30 ist annähernd bis zum äußeren Trägerabschnitt 8 geführt. Gemäß Fig. 8 verläuft der erste Querträger 30 in Höhe der beiden Längsträger 5 und ragt abschnittsweise in den Hohlraum 35 der vorderen Längsträger 5 hinein. Das Tragelement 31 weist im Querschnitt gesehen in einem mittleren Bereich seiner Höhenerstreckung eine Einprägung 27 auf.

Der innere Trägerabschnitt 9 endet vor der Stirnwand 3 und ist über einen Befestigungsflansch 36 auf den Querträger 30 aufgesetzt. Zur Verstärkung ist auf die Innenseite des Trägerabschnitts 8 und den Querträger 30 ein zusätzlicher Schuh 37 aufgesetzt. Ferner ist an der Stirnwand 3 in Höhe des ersten Querträgers 30 auf der dem Fahrgastraum 2 zugekehrten Seite ein zweiter, ein-oder mehrteilig ausgebildeter Querträger 38 angeordnet. Dieser ist in einem mittleren Bereich seiner Quererstreckung mit einer auf die Oberseite des Mitteltunnels 25 aufgesetzten Tunnelverstärkung 39 kraftübertragend verbunden.

Der zweite Querträger 38 wird durch ein profiliertes ein- oder mehrteiliges hutförmiges Schließblech 40 gebildet, das vom Fahrgastraum 2 her auf die Stirnwand 3 aufgesetzt ist und in einem mittleren Bereich seiner Höhenerstreckung eine Eindrückung 47 aufweist.

Der zweite Querträger 38 erweitert sich in schrägverlaufenden äußeren Bereichen der Stirnwand 3 nach unten hin und teilt sich in zwei übereinanderliegende Hohlträgerabschnitte 41, 42. Der obenliegende Hohlträgerabschnitt 41 ist an die Stirnwand 3, die Radhauswandung 4 und die aufrechte Scharniersäule 28 angeschlossen. Der untere Hohlträgerabschnitt 42 ist mit der Stirnwand 3, dem Schweller 29 und dem Boden 17 der Aufbaustruktur 1 fest verbunden, wobei der Boden 17 auf den unteren Hohlträgerabschnitt 42 aufgesetzt ist.

Zwischen den beiden übereinanderliegenden Hohlträgerabschnitten 41, 42 ist ein stegförmiger Verbindungsbereich 43 ausgebildet, in dem die Stirnwand 3 und ein Wandabschnitt der Eindrückung 47 des zweiten Querträgers 38 flach aufeinanderliegen. Der stegförmige Verbindungsbereich 43 verbreitert sich - in Höhenrichtung gesehen - zur Scharniersäule 28 hin kontinuierlich. Das innerhalb des vorderen Längsträgers 5 angeordnete Stegblech 34 erstreckt sich lediglich im Bereich des Anschlußträgers 14, wobei das Stegblech 34 nach unten hin in Richtung Bodenträger 15 gezogen ist und sich an der Stirnwand 3 abstützt.

Die Tunnelverstärkung 39 ist - in Längsrichtung gesehen - mehrteilig ausgebildet. Das mit der Stirnwand 3 bzw. dem zweiten Querträger 38 verbundene Teil 44 der Tunnelverstärkung 39 verläuft schräg nach unten und ist an einen etwa horizontal ausgerichteten, längsverlaufenden Abschnitt 45 der Tunnelverstärkung 39 angschlossen. Die Tunnelverstärkung 39 umgreift den zweiten Querträger 38 abschnittsweise, wobei das vordere, schrägverlaufende Teil 44 als Frontcrashstütze dient.

Aus Gewichtsgründen sind die gemeinsamen Verbindungsflansche 46 von angrenzenden Trägerblechen örtlich ausgespart.

## Patentansprüche

1. Aufbaustruktur eines Personenkraftwagens mit einer zwischen dem Vorderwagen und dem Fahrgastraum angeordneten Stirnwand, mit zwei voneinander beabstandeten vorderen Längsträgern, die jeweils an einen dahinterliegenden, in Verlängerung des Längsträgers verlaufenden Bodenträger angeschlossen sind, mit seitlich außenliegenden Schwellern, einem Boden und aufrechten Scharniersäulen, **dadurch gekennzeichnet,** daß die beiden unteren, vorderen Längsträger (5) bis zur Stirnwand (3) herangeführt und mit dieser und einem ersten, außenseitig auf die Stirnwand (3) aufgesetzten Querträger (30) kraftübertragend verbunden sind und daß an der Stirnwand (3) in Höhe des ersten Querträgers (30) auf der dem Fahrgastraum zugekehrten Seite ein zweiter Querträger (38) angeordnet ist, der in einem mittleren Bereich seiner Quererstreckung mit einer auf den Mitteltunnel (25) aufgesetzten Tunnelverstärkung (39) verbunden ist und daß sich der zweite Querträger (38) in seitlich außenliegenden Bereichen - in Höhenrichtung gesehen - nach unten hin erweitert und jeweils in zwei getrennte Hohlträgerabschnitte (41, 42) aufteilt, wobei der obenliegende Hohlträgerabschnitt (41) an die Stirnwand (13), die Radhauswandung (4) und die Scharniersäule (28) angeschlossen ist, wogegen der untere Hohlträgerabschnitt (42) mit der Stirnwand (3), dem Schweller (29) und dem Boden (17) verbunden ist.

2. Aufbaustruktur nach Anspruch 1, **dadurch gekennzeichnet,** daß zwischen den beiden übereinanderliegenden Hohlträgerabschnitten (41, 42) ein stegförmiger Verbindungsbereich (43) ausgebildet ist, in dem die Stirnwand (3) und ein eingeprägter Wandabschnitt des zweiten Querträgers (38) flach aufeinanderliegen.

3. Aufbaustrukur nach Anspruch 2, **dadurch gekennzeichnet,** daß sich der stegförmige Verbindungsbereich (43) von der Stirnwand (3) zur Scharniersäule (28) hin kontinuierlich verbreitert.

4. Aufbaustruktur nach Anspruch 1, **dadurch gekennzeichnet,** daß der erste Querträger (30) durch ein auf die Stirnwand (3) aufgesetztes, hutförmig profiliertes Tragelement (31) gebildet wird, da an seinen seitlich außenligenden Enden an die Stirnwand (3) und ein innerhalb der vorderen Längsträger (5) angeordnetes, aufrechtes Stegblech (34) angeschlossen ist.

5. Aufbaustruktur nach den Ansprüchen 1 und 4, **dadurch gekennzeichnet,** daß der erste Querträger (30) mit seitlich außenliegenden Endbereichen (33) abschnittsweise in den Hohlraum (35) der vorderen Längsträger (5) hineinragt, wobei ein innerer Trägerabschnitt (9) des vorderen Längsträgers (5) mit einem Befestigungsflansch (36) auf den Querträger (30) aufgesetzt ist.

6. Aufbaustruktur nach Anspruch 4, **dadurch gekennzeichnet,** daß das innerhalb der vorderen Längsträger (5) angeordnete aufrechte Stegblech (34) lediglich im Bereich des Anschlußträgers (14) vorgesehen ist und daß sich ein hintenliegender Endbereich des Stegblechs (34) an der Stirnwand (3) abstützt.

7. Aufbaustruktur nach Anspruch 1, **dadurch gekennzeichnet,** daß die Tunnelverstärkung (39) - in Längsrichtung gesehen - mehrteilig ausgebildet ist, wobei das mit der Stirnwand verbundene Teil (44) der Tunnelverstärkung (39) schräg nach unten hin verläuft und an einen, etwa horizontal ausgerichteten, längsverlaufenden Abschnitt (45) der Tunnelverstärkung (39) angeschlossen ist.

8. Aufbaustruktur nach den Ansprüchen 1 und 7, **dadurch gekennzeichnet,** daß die Tunnelverstärkung (39) den zweiten Querträger (38) abschnittsweise umgreift.

9. Aufbaustruktur nach Anspruch 1, **dadurch gekennzeichnet,** daß jeder der beiden vorderen Längsträger (5) an seinem, der Stirnwand (3) abgekehrten Ende eine Querschnittsverweiterung aufweist, in die eine Pralldämpferaufnahme eingesetzt ist.

10. Aufbaustruktur nach Anspruch 8, **dadurch gekennzeichnet,** daß die beiden vorderen Längsträger (5) im Bereich der Pralldämpferaufnahme durch einen profilierten Querträger (11) miteinander verbunden sind, wobei auf den Querträger (11) in einen mittleren Bereich seiner Quererstreckung eine Schloßaufnahme (12) und ein Schließblech (13) aufgesetzt sind.

11. Aufbaustruktur nach den Ansprüchen 1 und 10, **dadurch gekennzeichnet,** daß zwischen den vorderen Längsträgern (5), dem Querträger (11) und einer querverlaufenden Schottwand (21) eine tieferliegende Reserveradmulde (22) vorgesehen ist.

12. Aufbaustruktur nach Anspruch 10, d**dadurch gekennzeichnet,** daß an der Außenseite der Reserveradmulde (22) ein Versteifungsrahmen (23) ausgebildet ist, an dem die Vorderachsaufnahme vorgesehen ist.

## Claims

1. A body structure of a passenger car with a front wall arranged between the forward structure of the car and the passenger compartment, with two spaced front longitudinal frame members each attached to a floor support extending as a continuation of the longitudinal frame member and situated therebehind, with sills arranged laterally on the outside, a floor and upright hinge columns, **characterized in that** the two lower front longitudinal frame members (5) extend as far as the front wall (3) and are connected in a force-transmitting manner thereto and to a first transverse frame member (30) mounted on the outside of the front wall (3), and a second transverse frame member (38) is mounted on the side of the front wall (3) facing the passenger compartment at the level of the first transverse frame member (30), the second transverse frame member (38) being connected in a central region of the transverse extension thereof to a tunnel reinforcement (39) mounted on the centre tunnel (25), and the second transverse frame member (38) is extended downwards - as viewed in the vertical direction - in laterally outer areas and is divided into two respective separate hollow support portions (41, 42), wherein the upper hollow support portion (41) is attached to the front wall (3), the wheel-arch wall (4) and the hinge column (28), whereas the lower hollow support portion (42) is connected to the front wall (3), the sill (29) and the floor (17).

2. A body structure according to Claim 1, **characterized in that** a web-shaped connecting area (43), in which the front wall (3) and an impressed wall portion of the second transverse frame member (38) rest flat against each other, is formed between the two hollow support portions (41, 42) arranged one above the other.

3. A body structure according to Claim 2, **characterized in that** the web-shaped connecting area (43) is continuously widened from the front wall (3) to the hinge column (28).

4. A body structure according to Claim 1, **characterized in that** the first transverse frame member (30) is formed by a support member (31) with a hat-shaped section which is mounted on the front wall (3) and [which] is attached at its laterally outer ends to the front wall (3) and to an upright web plate (34) arranged inside the front longitudinal frame member (5).

5. A body structure according to Claims 1 and 4, **characterized in that** laterally outer end areas (33) of the first transverse frame member (30) project in part into the cavity (35) of the front longitudinal frame member (5), wherein an inner portion (9) of the front longitudinal frame member (5) is mounted with a fastening flange (36) on the transverse frame member (30).

6. A body structure according to Claim 4, **characterized in that** the upright web plate (34) arranged inside the front longitudinal frame member (5) is provided only in the region of the connecting support (14), and a rear end area of the web plate (34) is supported on the front wall (3).

7. A body structure according to Claim 1, **characterized in that** the tunnel reinforcement (39) - as viewed in the longitudinal direction - is constructed in a plurality of parts, wherein the part (44) of the tunnel reinforcement (39) connected to the front wall extends obliquely downwards and is attached to a longitudinally extending portion (45) of the tunnel reinforcement (39) orientated substantially horizontally.

8. A body structure according to Claims 1 and 7, **characterized in that** the tunnel reinforcement (39) engages in part around the second transverse frame member (38).

9. A body structure according to Claim 1, **characterized in that** each of the two front longitudinal frame members (5) is provided at its end remote from the front wall (3) with a transverse widening into which an impact-damping receiving means is inserted.

10. A body structure according to Claim 8, **characterized in that** the two front longitudinal frame members (5) are connected together by a sectioned transverse frame member (11) in the region of the impact-damping receiving means, wherein a lock-receiving means (12) and a closure plate (13) are mounted on the transverse frame member (11) in a central area of the transverse extension thereof.

11. A body structure according to Claims 1 and 10, **characterized in that** a spare-wheel recess (22) situated at a lower level is provided between the front longitudinal frame members (5), the transverse frame member (11) and a transversely extending partition wall (21).

12. A body structure according to Claim 10, **characterized in that** a reinforcement frame (23), on which the front-axle receiving means is provided, is formed on the outside of the spare-wheel recess (22).

## Revendications

1. Structure de carrosserie d'une voiture de tourisme avec une paroi frontale placée entre l'avant et l'habitacle, avec deux longerons avant espacés l'un de l'autre, qui sont rattachés chacun à une poutre de plancher s'étendant dans le prolongement du longeron, avec des seuils situés latéralement à l'extérieur, un plancher et des montants à charnières verticaux, caractérisée en ce que les deux longerons (5) avant, inférieurs, s'étendent jusqu'à la paroi frontale (3) et sont reliés à celle-ci, de manière à transmettre les forces ainsi qu'a une première traverse (30), placée extérieurement sur la paroi frontale (3) et en ce qu'une seconde traverse (38) est placée sur la paroi frontale (3), à hauteur de la première traverse (30), sur le côté tourné vers l'habitacle, seconde traverse qui est reliée, dans une zone centrale de son extension transversale, avec un renfort de tunnel (39), placé sur le tunnel central (25) et en ce que la seconde traverse (38) est élargie vers le bas, dans des zones situées latéralement à l'extérieur - vues dans le sens de la hauteur - et est partagée en deux portions de poutre creuse (41, 42), la portion de poutre creuse supérieure (41) étant rattachée à la paroi frontale (13), à la paroi de logement de roue (4) et aux montants à charnières (28), tandis que la portion de poutre creuse inférieure (42) est reliée à la paroi frontale (3), au seuil (29) et au plancher (17).

2. Structure de carrosserie selon la revendication 1, caractérisée en ce qu'entre les deux portions de poutre creuse (41, 42) superposées est formée une zone de liaison (43) en forme d'entretoise, dans laquelle la paroi frontale (3) et une portion de paroi en creux de la seconde traverse (8), reposent à plat l'une sur l'autre.

3. Structure de carrosserie selon la revendication 2, caractérisée en ce que la zone de liaison (43) en forme d'entretoise s'élargit en continu, de la paroi frontale (3) vers le montant à charnières (28).

4. Structure de carrosserie selon la revendication 1, caractérisée en ce que la première traverse (30) est formée par un élément de support (31) profilé en forme de chapeau, placé sur la paroi frontale (3), étant donné qu'à ses extrémités situées latéralement à l'extérieur une tôle d'âme (34) verticale, placée à l'intérieur du longeron avant (5), est raccordée à la paroi frontale (3).

5. Structure de carrosserie selon les revendications 1 et 4, caractérisée en ce que la première traverse (30) pénètre, par endroits, dans la cavité (35) du longeron avant (5), avec des zones d'extrémité (33) situées latéralement à l'extérieur, une portion intérieure (9) du longeron avant (5) étant placée avec une bride de fixation (36) sur la traverse (30).

6. Structure de carrosserie selon la revendication 4, caractérisée en ce que la tôle d'âme (34) verticale, située à l'intérieur du longeron avant (5), est prévue uniquement dans la zone de la poutre de raccord (4) et en ce qu'une zone d'extrémité située à l'arrière de la tôle d'âme (34), prend appui contre la paroi frontale (3).

7. Structure de carrosserie selon la revendication 1, caractérisée en ce que le renfort de tunnel (39) est en plusieurs parties - vues dans la direction longitudinale -, la partie (44), reliée à la paroi frontale, du renfort de tunnel (39) s'étendant obliquement vers le bas et étant raccordée à une portion (45), s'étendant longitudinalement, orientée horizontalement, du renfort de tunnel (30).

8. Structure de carrosserie selon les revendications 1 et 7, caractérisée en ce que le renfort de tunnel (39) entoure la seconde traverse (38), par endroits.

9. Structure de carrosserie selon la revendication 1, caractérisée en ce que chacun des deux longerons avant (5) présente, à son extrémité tournée à l'opposé de la paroi frontale (3), un élargissement de section transversale, dans lequel est inséré un logement d'amortisseur de rebondissement.

10. Structure de carrosserie selon la revendication 8, caractérisée en ce que les deux longerons avant (5) sont reliés entre eux dans la zone du logement d'amortisseur de rebondissement par une traverse (11) profilée, un logement de serrure (12) et une cloison de serrure (13) étant placés sur la traverse (11), dans une zone médiane de son extension transversale.

11. Structure de carrosserie selon les revendications 1 et 10, caractérisée en ce qu'il est prévu un logement de roue de secours (22), situé plus en profondeur, entre les longerons avant (5), la traverse (11) et une cloison (21) s'étendant transversalement.

12. Structure de carrosserie selon la revendication 10, caractérisée en ce qu'il est formé sur le côté extérieur du logement de roue de secours (22), un cadre raidisseur (23) sur lequel est prévu le logement d'essieu avant.
